# EUROPEAN PATENT APPLICATION

(11) **EP 4 131 893 A1**
(43) Date of publication of application: **08.02.2023**
(21) Application number: 21201683.6
(22) Date of filing: 08.10.2021
(51) Int. Cl.: H04L 65/1076

(54) **METHODS AND SYSTEMS FOR DETECTING CALL SPOOFING IN A TELECOMMUNICATION NETWORK**

(30) Priority: 05.08.2021 IN 202141035412
(71) Applicant: Subex Assurance LLP, 560103 Bangalore, Karnataka (IN)
(72) Inventor: NAG, Amit Kumar, 560102 Bangalore (IN)
(74) Representative: Bringer IP

(57) **Abstract**

Embodiments herein disclose methods and systems (100) for detecting call spoofing in a telecommunication network. The system (100) includes a memory (230), at least one processor (240), a call spoofing controller (210) connected to the memory and the processor configured to: create a mirror of signaling protocols for an incoming call from first a user device (102). The call spoofing controller (210) is further configured to determine if a caller phone number belongs to a network operator using a source Internet Protocol (IP) address in an incoming INVITE/Initial Address Message (IAM). The call spoofing controller (210) is further configured to determine the incoming call as a spoofed call, if the source IP address does not match a Session Border Controller/Service Switching Point (SBC/SSP) of the network operator.

## Description

### TECHNICAL FIELD

Embodiments disclosed herein relate to telecommunication networks and more particularly to a method and system for detecting call spoofing using signaling protocols in telecommunication networks.

### BACKGROUND

Caller ID in telecommunication networks provide a phone number or name of a caller to a recipient of a voice call. The caller ID in the voice call serves to authenticate the caller. Existing protocols and mechanisms, used in the telecommunication industry, do not provide a mechanism to validate the authenticity of the caller ID being show in the voice call.

With the evolution of signaling protocols in telecommunication networks, it has become possible for attackers and fraudsters to perform caller ID spoofing. Protocols such as SIP (Session Initiation Protocols) contain fields in the header, where the caller phone number is present in plain text and can be modified during initiation of a call, where an INVITE SIP message is used. Though, encrypted SIP signaling can also be used, but SIP does not authenticate the caller Phone number used in the INVITE SIP message.

An attacker can simply be connected to the network using SIP trunks and can use a modified SIP User Agent to manipulate the INVITE SIP message to use any phone number of the attacker's preference. When such call is made, the recipient of the call will see the phone number chosen by the fraudster. For example, consider a scenario where Bob, an attacker is calling Eve, by imitating Alice's Identity. Here, Bob creates and INVITE SIP message with Alice's phone number or name and initiates a VOIP call to Eve. When Eve receives the call, she will see Alice's phone number or name on his screen.

The network may have direct or in-direct monetary losses and reputational damages. For example, in case of long-distance incoming calls, the intermediate network parameters may change the Caller ID of the incoming calls to a local phone number reduce the termination charges, resulting in a revenue loss for the network. In another example, an attacker may spoof a bank or network customer service and ask the network customers to change/upgrade their subscriber identity modules or subscriber identification modules (SIMs) and then can have access to One Time Passwords (OTPs) and bank details, which can be used to perform transactions on customer's behalf. In another example, pranksters can use Caller ID spoofing to imitate another person's identity.

If telecommunication operators are not able to detect and prevent Caller ID spoofing, then the call spoofing can damage the reputation of the network operator and the network operator may also face charges from the authorities for not being able to control the frauds.

### OBJECTS

The principal object of the embodiments herein is to disclose methods and systems for detecting call spoofing in a telecommunication network, using signaling protocols.

Another object of the embodiments herein is to disclose methods and systems for detecting call spoofing in a telecommunication network, wherein the detection mechanism detects the caller ID spoofing in near real time.

### BRIEF DESCRIPTION OF FIGURES

The embodiments disclosed herein are illustrated in the accompanying drawings, throughout which like reference letters indicate corresponding parts in the various figures. The embodiments herein will be better understood from the following description with reference to the drawings, in which:
FIG. 1 depicts a telecommunication network, which can detect call spoofing using signaling protocols, according to embodiments as disclosed herein
FIG. 2 depicts a system for detecting call spoofing using signaling protocols, according to embodiments as disclosed herein; and
FIG. 3 is a flowchart depicting a method for detecting call spoofing using signaling protocols, according to embodiments as disclosed herein.

### DETAILED DESCRIPTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

Accordingly, the embodiments herein provide a method for detecting a call spoofing in a telecommunication network. The method includes mirroring of all voice signaling protocol data at the telecommunication network, which includes protocol like SIP/ISUP. The method further includes determining, by the system, if a caller phone number belongs to a network operator using a source Internet Protocol (IP) address in an incoming INVITE/Initial Address Message (IAM). The method further includes determining, by the system, the incoming call as a spoofed call, if the source IP address does not match a Session Border Controller/Service Switching Point (SBC/SSP) of the network operator, if the caller phone number in the incoming call belongs to the network operator (where the embodiments herein are deployed).

Embodiments herein further disclose that the method further includes sending an Any Time Interrogation/Service-Request-Inhibit (ATI/SRI) request to the caller phone number to retrieve a status of the caller phone number, if the caller phone number used in the incoming call does not belongs to the network operator.

Embodiments herein further disclose that the method further includes comparing, by the system, the status of the caller phone number with a Home Location Register (HLR) information present in the mirrored traffic of the signaling protocols; and determining, by the system, the incoming call as a spoofed call, if the caller phone number VLR information does not match the information indicated by HLR information.

Embodiments herein further disclose that while comparing the status of the caller phone number with the HLR information, the source IP address in the original INVITE/IAM message is analyzed, wherein if the source IP address does not match the information of HLR retrieved from the ATI/SRI response then the call is marked as the fraudulent or spoofed.

Embodiments herein further disclose if the response of the INVITE/IAM message is an error indicating the caller phone number does not exist, then the system categorizes the caller phone number as a non-allocated phone number is being used for spoofing the call and then call would be marked as the fraudulent or spoofed call.

Embodiments herein further disclose the caller phone number is stored in a data storage to further block call from the caller phone number.

Embodiments herein further disclose the method further includes tearing down, by the system, a call signal from the caller phone of the caller phone number is determined as the fraudulent or spoofed call.

In an aspect, the embodiments herein provide a system. The system includes a memory, at least one processor, a call spoofing controller connected to the memory and the processor configured to: create a mirror of signaling protocols for each incoming call from at the telecommunication network. The call spoofing controller further configured to determine if a caller phone number belongs to a network operator using a source Internet Protocol (IP) address in an incoming INVITE/Initial Address Message (IAM). The call spoofing controller further configured to determine the incoming call as a spoofed call, if the source IP address does not match a Session Border Controller/Service Switching Point (SBC/SSP) of the network operator.

Embodiments herein further disclose that the call spoofing controller is further configured to send an Any Time Interrogation/Service-Request-Inhibit (ATI/SRI) request to the caller phone number to retrieve a status of the caller phone number, if the caller phone number used in the incoming call does not belongs to the network operator.

Embodiments herein further disclose that the call spoofing controller is further configured to compare the status of the caller phone number with a Home Location Register (HLR) information present in the mirrored traffic of the signaling protocols; and determine the incoming call as a spoofed call, if the caller phone number is not present in the HLR information

Embodiments herein further disclose that while comparing the status of the caller phone number with the HLR information, the source IP address in the original INVITE/IAM message is analyzed, wherein if the source IP address does not match the information of HLR retrieved from the ATI/SRI response then the call is marked as the fraudulent or spoofed.

Embodiments herein further disclose if the response of the INVITE/IAM message is an error indicating the caller phone number does not exist, then the system categorizes the caller phone number as a non-allocated phone number is being used for spoofing the call and then call would be marked as the fraudulent or spoofed call.

Embodiments herein further disclose the caller phone number is stored in a data storage to further block call from the caller phone number.

Embodiments herein further disclose the call spoofing controller is further configured to tear down a call signal from the caller phone of the caller phone number is determined as the fraudulent or spoofed call.

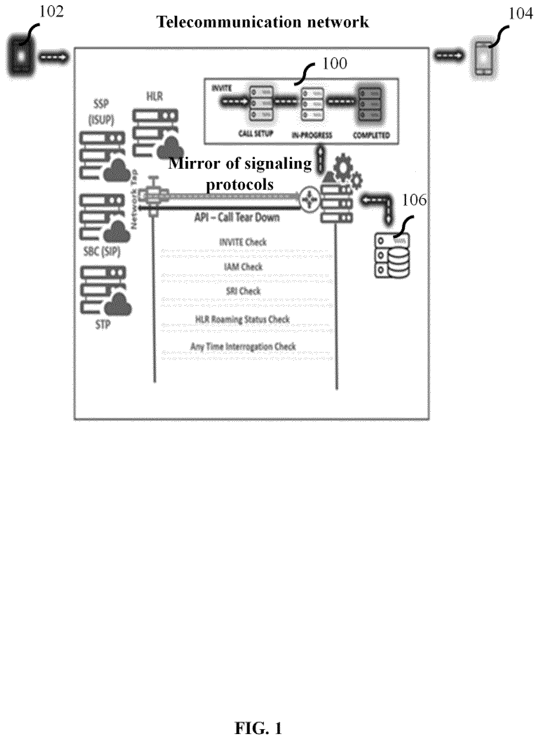

The embodiments herein achieve methods and system for detecting call spoofing in telecommunication networks using signaling protocols. Referring now to the drawings, and more particularly to FIGS. 1 through 3, where similar reference characters denote corresponding features consistently throughout the figures, there are shown at least one embodiment.

FIG. 1 depicts a telecommunication network, which can detect call spoofing using signaling protocols, according to embodiments as disclosed herein. The telecommunication network includes a system 100, at least one user device 102, 104, and a data storage 106. A first user device 102 can initiate a call to a second user device 104. In some embodiments, the first user device 102 maybe a caller phone and the second user device 104 maybe a calling phone. The call can be Examples of the user device 102, 104 can be a cellular phone, a smart phone, a smart watch, a Personal Digital Assistant (PDA), a tablet computer, a laptop computer, a virtual reality device, an immersive system, an Internet of Things (IoT) device, or any other device that can make/receive calls over the telecommunication network. The data storage 106 includes a list of fraudulent or spoof call phone numbers detected by the system 100 and/or users of the network. Examples of the data storage can be, but not limited to, a file server, a data server, the Cloud, or any other suitable location for storing data.

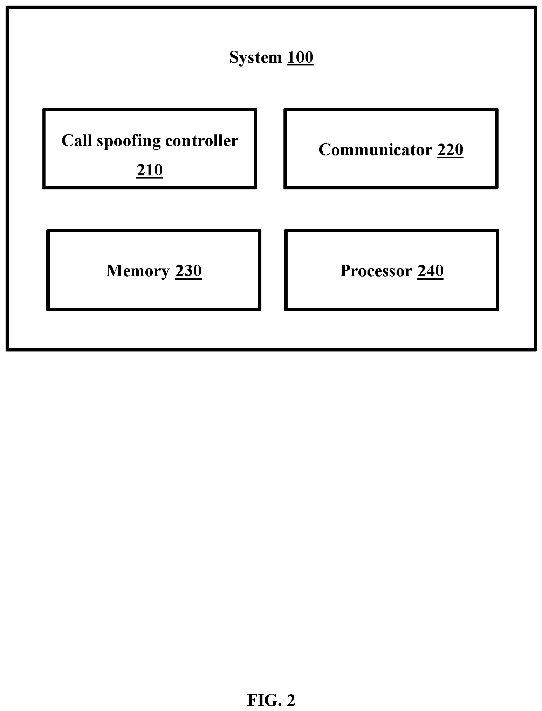

FIG. 2 depicts the system 100 for detecting call spoofing using signaling protocols, according to embodiments as disclosed herein. The system includes a memory 230, at least one processor 240, a call spoofing controller 210 connected to the memory 230 and the processor 240. The call spoofing controller 210 is configured to create a mirror of signaling protocols for each incoming call at the telecommunication network for signaling protocols SIP/ISUP. The call spoofing controller 210 performs deep packet inspection of the mirrored signaling traffic and maintains state of each voice call in the controller 210.

The call spoofing inspection is done at the call setup stage of each voice call. The call spoofing controller 210 is further configured to determine if a caller phone number belongs to a specific network operator using a source IP address in an incoming INVITE/Initial Address Message (IAM). The call spoofing controller 210 is further configured to compare the incoming INVITE/IAM message with an operator Session Border Controller/Service Switching Point/Visitor Location Register (SBC/SSP/VLR). If the source IP does not match the operator SBC/SSP/VLR, then the call spoofing controller 210 determines that the call coming from the caller phone is a fraudulent or spoofed call. As the phone number belongs to the operator where solution is deployed VLR information is retrieved from HLR (Home location Register) of the telecommunication Network. If the caller phone number used in the incoming call does not belong to the network operator where solution is deployed and Caller phone number may belong to a partner or non-partner telecommunication operator, then, an Any Time Interrogation/Service-Request-Inhibit (ATI/SRI) request is sent by the call spoofing controller 210 to the caller phone number to retrieve a status of the caller phone number.. The call spoofing controller 210 is further configured to compare the incoming INVITE/IAM message with an operator Session Border Controller/Service Switching Point/Visitor Location Register (SBC/SSP/VLR). If the source IP does not match the operator SBC/SSP/VLR, then the call spoofing controller 210 determines that the call coming from the caller phone is a fraudulent or spoofed call. The call spoofing controller 210 is further configured to tear down a call signal from the caller phone of the caller phone number, if the call is determined as the fraudulent or spoofed call.

In some embodiments, the call spoofing controller 210 compares the status of the caller phone number with the HLR information, the source IP in the original INVITE/IAM message is analyzed. If the source IP does not match the information of HLR retrieved from the ATI/SRI response then the call is marked as the fraudulent or spoofed. If the response of the INVITE/IAM message is an error indicating the caller phone number does not exist, then the call spoofing controller 210 categorizes the caller phone number as a non-allocated phone number is being used for spoofing the call and then call would be marked as the fraudulent or spoofed call. The caller phone number is stored in a data storage to further block call from the caller phone number.

In some embodiments, the call spoofing controller 210 also utilizes SIP field attributes like User Agent, Source IP, SDP parameters, and so on, to detect known software used in generating spoofed calls. If any such attribute matches known signature, the call is then marked as fraudulent/spoofed by the call spoofing controller 210 and a call tear down signal would be sent back to Session Border Controller (SBC) to tear down the call. If the response of the INVITE/IAM message is an error indicating phone number does not exist, the non-excitant phone number means a non-allocated phone number is being used for spoofing the call and the call would be marked as fraudulent/spoofed and a call tear down signal would be sent back to the SBC/SSP to tear down the call. The same phone number is stored in a data storage to further block call from such phone numbers. The call spoofing controller 210 sends the INVITE/IAM message back to the phone number used in the incoming call. If the response of the INVITE/IAM message is not 486 Busy or REL (User busy) then it means the actual phone number is being spoofed and call would be marked as fraudulent/spoofed and a call tear down signal would be sent back to SBC/SSP to tear down the call.

In some embodiments, the call spoofing controller 210 maintains state of each call it retrieves, and the attributes required to create signaling messages for fraudulent call in the data storage 106. Then, the call spoofing controller 210 utilizes the trunk channel with SBC/SSP to inject a BYE/RLC message as a 'man in the middle' to tear down the fraudulent call.

Further, the processor 240 is configured to execute instructions stored in the memory 230 and to perform various processes. The communicator 220 is configured for communicating internally between internal hardware components and with external devices via one or more networks. The memory 230 also stores instructions to be executed by the processor 240. The memory 230 may include non-volatile storage elements. Examples of such non-volatile storage elements may include magnetic hard discs, optical discs, floppy discs, flash memories, or forms of electrically programmable memories (EPROM) or electrically erasable and programmable (EEPROM) memories. In addition, the memory 230 may, in some examples, be considered a non-transitory storage medium. The term "non-transitory" may indicate that the storage medium is not embodied in a carrier wave or a propagated signal. However, the term "non-transitory" should not be interpreted that the memory 230 is non-movable. In certain examples, a non-transitory storage medium may store data that can, over time, change (e.g., in Random Access Memory (RAM) or cache).

At least one of the plurality of modules may be implemented through an AI model. A function associated with the AI model may be performed through the non-volatile memory, the volatile memory, and the processor 240. The processor 240 may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU).

The one or a plurality of processors control the processing of the input data in accordance with a predefined operating rule or artificial intelligence (AI) model stored in the non-volatile memory and the volatile memory. The predefined operating rule or artificial intelligence model is provided through training or learning.

Here, being provided through learning means that a predefined operating rule or AI model of a desired characteristic is made by applying a learning algorithm to a plurality of learning data. The learning may be performed in a device itself in which AI according to an embodiment is performed, and/o may be implemented through a separate server/system.

The AI model may comprise of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined system (for example, a robot) using a plurality of learning data to cause, allow, or control the system to make a determination or prediction. Examples of learning algorithms include, but are not limited to, supervised learning, unsupervised learning, semi-supervised learning, or reinforcement learning.

Although the FIG. 2 shows various hardware components of the system 100 but it is to be understood that other embodiments are not limited thereon. In other embodiments, the system 100 may include less or a greater number of components. Further, the labels or names of the components are used only for illustrative purpose and does not limit the scope of the invention. One or more components can be combined together to perform same or substantially similar function in the system 100.

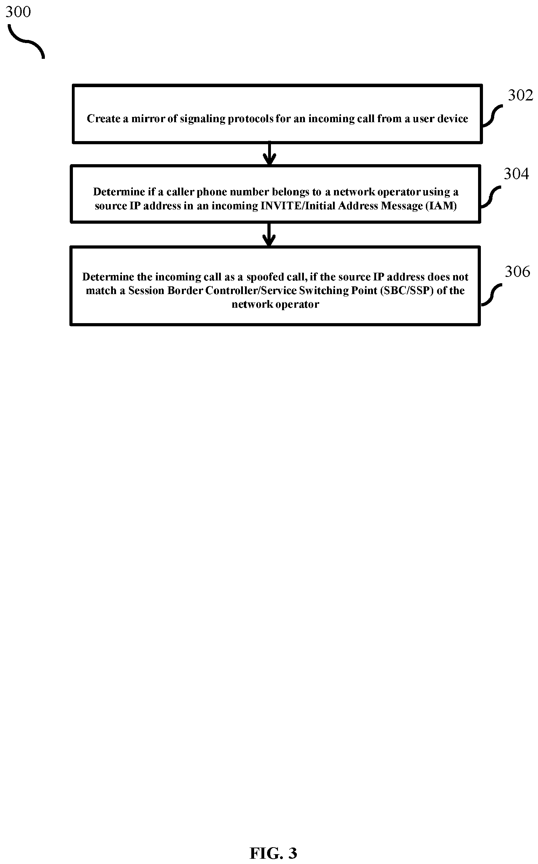

FIG. 3 depicts a method for detecting call spoofing using signaling protocols, according to embodiments as disclosed herein. At step 302, the method 300 includes creating, by a system (100), a mirror of signaling protocols for an incoming call from a first user device (102). At step 304, the method 300 includes determining, by the system (100), if a caller phone number belongs to a network operator using a source Internet Protocol (IP) address in an incoming INVITE/Initial Address Message (IAM). At step 306, the method 300 includes determining, by the system (100), the incoming call as a spoofed call, if the source IP address does not match a Session Border Controller/Service Switching Point (SBC/SSP) of the network operator.

The various actions in method 300 may be performed in the order presented, in a different order or simultaneously. Further, in some embodiments, some actions listed in FIG. 3 may be omitted.

The embodiments disclosed herein can be implemented through at least one software program running on at least one hardware device and performing network management functions to control the elements. The elements can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of at least one embodiment, those skilled in the art will recognize that the embodiments herein can be practiced with modification within the spirit and scope of the embodiments as described herein.

## Claims

1. A method (300) for detecting call spoofing, the method comprising:
creating (302), by a system (100), a mirror of signaling protocols for an incoming call from a first user device (102);
determining (304), by the system (100), if a caller phone number belongs to a network operator using a source Internet Protocol (IP) address in an incoming INVITE/Initial Address Message (IAM); and
determining (306), by the system (100), the incoming call as a spoofed call, if the source IP address does not match a Session Border Controller/Service Switching Point (SBC/SSP) of the network operator.

2. The method, as claimed in claim 1, wherein the method further comprises sending an Any Time Interrogation/Service-Request-Inhibit (ATI/SRI) request to the caller phone number to retrieve a status of the caller phone number, if the caller phone number used in the incoming call does not belongs to the network operator.

3. The method, as claimed in claim 1, wherein the method further comprises
comparing, by the system (100), the status of the caller phone number with a Home Location Register (HLR) information present in the mirrored traffic of the signaling protocols; and
determining, by the system (100), the incoming call as a spoofed call, if the caller phone number is not present in the HLR information.

4. The method as claimed in claim 1, wherein while comparing the status of the caller phone number with the HLR information, the source IP address in the original INVITE/IAM message is analyzed, wherein if the source IP address does not match the information of HLR retrieved from the ATI/SRI response then the call is marked as the fraudulent or spoofed.

5. The method as claimed in claim 1, wherein if the response of the INVITE/IAM message is an error indicating the caller phone number does not exist, then the system (100) categorizes the caller phone number as a non-allocated phone number is being used for spoofing the call and then call would be marked as the fraudulent or spoofed call.

6. The method as claimed in claim 5, wherein the caller phone number is stored in a data storage (106) to further block call from the caller phone number.

7. The method, as claimed in claim 1, wherein the method further comprises tearing down, by the system (100), a call signal from the caller phone of the caller phone number is determined as the fraudulent or spoofed call.

8. A system (100) comprising:
a memory (130);
at least one processor (140);
a call spoofing controller (110) connected to the memory and the processor configured to:
create a mirror of signaling protocols for an incoming call from a first user device (102);
determine if a caller phone number belongs to a network operator using a source Internet Protocol (IP) address in an incoming INVITE/Initial Address Message (IAM); and
determine the incoming call as a spoofed call, if the source IP address does not match a Session Border Controller/Service Switching Point (SBC/SSP) of the network operator.

9. The system (100), as claimed in claim 8, wherein the call spoofing controller (210) further configured to send an Any Time Interrogation/Service-Request-Inhibit (ATI/SRI) request to the caller phone number to retrieve a status of the caller phone number, if the caller phone number used in the incoming call does not belongs to the network operator.

10. The system (100), as claimed in claim 8, wherein the call spoofing controller (210) further configured to
compare the status of the caller phone number with a Home Location Register (HLR) information present in the mirrored traffic of the signaling protocols; and
determine the incoming call as a spoofed call, if the caller phone number is not present in the HLR information.

11. The system (100), as claimed in claim 10, wherein while comparing the status of the caller phone number with the HLR information, the source IP address in the original INVITE/IAM message is analyzed, wherein if the source IP address does not match the information of HLR retrieved from the ATI/SRI response then the call is marked as the fraudulent or spoofed.

12. The system (100), as claimed in claim 8, wherein if the response of the INVITE/IAM message is an error indicating the caller phone number does not exist, then the call spoofing controller (210) categorizes the caller phone number as a non-allocated phone number is being used for spoofing the call and then call would be marked as the fraudulent or spoofed call.

13. The system (100), as claimed in claim 12, wherein the caller phone number is stored in a data storage (106) to further block call from the caller phone number.

14. The system (100), as claimed in claim 8, wherein the call spoofing controller (210) further comprises tearing down, by the call spoofing controller (210), a call signal from the caller phone of the caller phone number is determined as the fraudulent or spoofed call.
